Europäisches Patentamt

(19) European Patent Office

Office européen des brevets

(11) Publication number: **0 244 056**
**A2**

(12) **EUROPEAN PATENT APPLICATION**

(21) Application number: **87301424.5**

(22) Date of filing: **19.02.87**

(51) Int. Cl.³: **C 01 B 33/28**
**B 01 J 29/06**
**//B01J29/28**

(30) Priority: **05.03.86 US 836354**

(43) Date of publication of application:
**04.11.87 Bulletin 87/45**

(84) Designated Contracting States:
**AT BE DE FR GB IT NL SE**

(71) Applicant: **MOBIL OIL CORPORATION**
**150 East 42nd Street**
**New York New York 10017(US)**

(72) Inventor: **Chang, Clarence Dayton**
**11 Murray Place**
**Princeton New Jersey 08540(US)**

(72) Inventor: **Shihabi, David Said**
**8 Moores Mill Mt. Rose Road**
**Pennington New Jersey 08534(US)**

(72) Inventor: **Han, Scott**
**4 Valerie Lane**
**Lawrenceville New Jersey 08644(US)**

(72) Inventor: **Miale, Joseph Nicholas**
**25 Merritt Drive**
**Lawrenceville New Jersey 08648(US)**

(74) Representative: **Cooper, John Anthony et al,**
**Mobil Court 3 Clements Inn**
**London WC2A 2EB(GB)**

(54) **Dealumination of zeolites.**

(57) Treatment of a zeolite having a $SiO_2:Al_2O_3$ ratio of at least about 3 with a source of fluoride ions and a source of silicon under hydrolytic conditions including a pH less than 7 results in increase in the $SiO_2:Al_2O_3$ ratio of the zeolite.

EP 0 244 056 A2

F-3947

## DEALUMINATION OF ZEOLITES

The present invention relates to modification of a crystalline aluminosilicate zeolite, e.g., ZSM-5, Y and beta, to increase its $SiO_2/Al_2O_3$ ratio.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction within which there are a number of smaller cavities which may be interconnected by a number of still smaller channels or pores. These cavities and pores are uniform in size within a specific zeolitic material. Since the dimensions of these pores are such as to accept for absorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example an alkali metal or an alkaline earth metal cation. This can be expressed wherein the ratio of aluminum to the number of various cations, such as Ca/2, Sr/2, Na, K or Li, is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation.

Prior art techniques have resulted in the formation of a great variety of synthetic zeolites. The zeolites have come to be designated by letter or other convenient symbols, as illustrated by zeolite Z (U.S. Patent No. 2,882,243), zeolite X (U.S. Patent No. 2,882,244), zeolite Y (U.S. Patent No. 3,130,007), zeolite ZK-5 (U.S. Patent No. 3,247,195), zeolite Beta, (U.S. Patent No. 3,308,069), zeolite ZK-4 (U.S. Patent No. 3,314,752), zeolite ZSM-5 (U.S. Patent No. 3,702,886), zeolite ZSM-11 (U.S. Patent No. 3,709,979), zeolite ZSM-12 (U.S. Patent No. 3,832,449), zeolite ZSM-20 (U.S. Patent No. 3,972,983), ZSM-35 (U.S. Patent No. 4,016,245), ZSM-38 (U.S. Patent No. 4,046,859) and zeolite ZSM-23 (U.S. Patent No. 4,076,842).

U.S. Patent No. 4,461,845 teaches a method for reactivating a steam-deactivated catalyst comprising a zeolite having a silicon/aluminum atomic ratio of at least 2. The method involves contact with an aluminum compound at elevated temperature, followed by contact with an aqueous acid solution. U.S. Patent No. 4,477,582 teaches a method for reactivating a steam-deactivated catalyst comprising a zeolite having a silicon/aluminum ratio of at least 3.5. The method of this patent involves contact with an alkali, alkaline earth or transition metal salt solution followed by contact with an aqueous ammonium ion solution.

In accordance with U.S. Patent No. 4,503,023, aluminum from $AlO_4$-tetrahedra of zeolites is extracted and substituted with silicon to form zeolite compositions having higher $SiO_2/Al_2O_3$ molar ratios. The preparative procedure involves contact of the starting zeolite having an $SiO_2/Al_2O_3$ molar ratio of about 3 or greater with an aqueous solution of a fluorosilicate salt using controlled proportions and temperature and pH conditions which are intended to avoid aluminum extraction without silicon substitution.

The fluorosilicate salt serves as the aluminum extractant and as the source of extraneous silicon which is inserted into the zeolite structure in place of the extracted aluminum.

U.S. Patent No. 4,427,790 describes a process for improving the activity of crystalline zeolites in which the zeolite in the "as synthesized" form or following ion-exchange is reacted with a compound having a complex fluoranion.

The use of chelating agents to remove framework and non-framework aluminum from faujasite materials is shown by G. T. Kerr, "Chemistry of Crystalline Aluminosilicates. V. Preparation of Aluminum Deficient Faujasites", J. Phys. Chem. (1968) 72 (7) 2594; T. Gross et al., "Surface Composition of Dealuminized Y Zeolites Studied by X-Ray Photoelectron Spectroscopy", Zeolites (1984) 4, 25; and J. Dwyer et al., "The Surface Composition of Dealuminized Zeolites", J. Chem. Soc., Chem. Comm. (1981) 42.

Other references teaching removal of aluminum from zeolites include U.S. Patent No. 3,442,795, and U.K. Patent No. 1,058,188 (hydrolysis and removal of aluminum by chelation); U.K. Patent No. 1,061,847 (acid extraction of aluminum); U.S. Patent No. 3,493,519 (aluminum removal by steaming and chelation); U.S. Patent No. 3,591,488 (aluminum removal by steaming); U.S. Patent No. 4,273,753 (dealuminization by silicon halides and oxyhalides); U.S. Patent No. 3,691,099 (aluminum extraction with acid); U.S. Patent No. 4,093,560 (dealuminization by treatment with salts); U.S. Patent No. 3,937,791 (aluminum removal with Cr(III) solutions); U.S. Patent No. 3,506,400 (steaming followed by chelation); U.S. Patent No. 3,640,681 (extraction of aluminum with acetylacetonate followed by dehydroxylation); U.S. Patent No. 3,836,561 (removal of aluminum with acid); German Patent No. 2,510,740 (treatment of zeolite with chlorine or chlorine-containing gases at high temperatures); Netherlands Patent No. 7,604,264 (acid extraction), Japan Patent No. 53/101,003 (treatment with EDTA or other materials to remove aluminum) and J. Catalysis, 54, 295 (1978) (hydrothermal treatment followed by acid extraction).

The use of ZSM-5 type zeolites in the conversion of olefins to provide lubricating oils is known, inter alia, from U.S. Patent Nos. 4,520,221 and 4,524,232. In the former, surface acidity of a ZSM-5 zeolite catalyst is neutralized by treating with a sterically hindered base such as 2,6-di-tert-butylpyridine. Employing the base-modified catalyst, propylene was converted to lubes with a 60 VI number increase over a lube oil prepared with the unmodified catalyst. The base must be added continuously during the conversion process. At high reaction severities, the base will react with the feed, a practical limitation on the use of such a catalyst.

According to the invention, there is provided a process of for removing aluminum from an aluminosilicate zeolite having a silica:alumina ratio of at least about 3:1 comprising the step of contacting the zeolite with a source of fluoride ions and a source of silicon atoms under hydrolytic conditions including a pH of less than about 7.

Using the process of the present invention, the acidity of a crystalline aluminosilicate zeolite can be reduced to provide a modified zeolite having enhanced catalytic properties for a variety of hydrocarbon conversions such as for the oligomerization of olefin to provide lubes of high viscosity index. In the present process, tetrahedral aluminum is extracted from the zeolite and is believed to be replaced with silicon.

The crystalline zeolites which are modified in accordance with this invention having a pore diameter of at least 3 Angstrom and preferably are members of a unique class of zeolitic materials which exhibit unusual properties. Although these zeolites have unusually low alumina contents, i.e., high silica to alumina mole ratios, they are very active even when the silica to alumina mole ratio exceeds 30. The activity is surprising since catalytic activity is generally attributed to framework aluminum atoms and/or cations associated with these aluminum atoms.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with silica to alumina mole ratios of at least 12 are useful, it is preferred to use zeolites having substantially higher silica/alumina ratios, e.g., 70 and above.

The present class of zeolites, after activation, acquire an intracrystalline sorption capacity for normal hexane which is greater than that for water, i.e., they exhibit "hydrophobic" properties. This hydrophobic character can be used to advantage in some applications.

The present class of zeolites also exhibit a pore structure which is intermediate in size between that of small pore Linde A and large pore zeolite X and Y and which therefore freely sorbs normal paraffins but provides only a constrained access to larger molecules.

Rather than attempt to judge from crystal structure whether or not a zeolite possesses the contrained access to molecules of larger cross-section than that of normal paraffins, a simple determination of the "Constraint Index" of the zeolite may be made. The term "Constraint Index" and a method of its determination is described in, for example, U.S. Patent No. 4,016,218. In particular the zeolites of the class preferred for use in the process of the invention exhibit a Constraint Index in the range of 1 to 12 when tested at some temperature in the range 290-540°C. Examples of zeolites having a Constraint Index within this range include ZSM-5, ZSM-11, ZSM-12, ZSM-23, ZSM-35, ZSM-38, ZSM-48, and zeolite beta, with ZSM-5 being especially preferred.

ZSM-5 is described in greater detail in U.S. Patent No. 3,702,886 and U.S. Patent No. Re. 29,948. ZSM-11 is described in U.S. Pat. No. 3,709,979.

ZSM-12 is described in U.S. Patent No. 3,832,449.

ZSM-23 is described in U.S. Patent No. 4,076,842.

ZSM-35 is described in U.S. Patent No. 4,016,245.

ZSM-38 is described in U.S. Patent No. 4,046,859.

ZSM-48 is described in U.S. Patent No. 4,375,573.

Zeolite beta is described in U.S. Patent Nos. 3,308,069 and Re. 28,341

The process of the invention can also be used to increase the silica/alumina ratio of zeolite Y which, as synthesized, tends to have a silica/alumina ratio of 5:1 or less.

In accordance with the invention, zeolites containing framework aluminum characterized by an $SiO_2:Al_2O_3$ ratio of at least about 5:1, are dealuminized by contact with fluoride ion, in the presence of a source silicon atoms under hydrolytic conditions. Decreased aluminum content of the product zeolite can be measured directly by elemental analysis or by decrease in ammonium ion exchange capacity or by decrease in hexane cracking activity as measured by an alpha value determination.

The hydrolytic conditions require the presence of water during contact of the zeolite with the fluoride ion. In one embodiment of the invention, hydrolytic conditions are satisfied by using aqueous solutions of the fluoride ion source; these solutions may be dilute or concentrated solution of sources of fluoride ion, preferably ammonium fluoride or ammonium hydrogen fluoride, and will have a pH range from 2 to 7. The pH of these solutions can, however, be adjusted by addition of soluble hydroxides, preferably ammonium hydroxide. The hydrolytic conditions may involve temperatures greater than ambient temperature, although generally the temperature will not exceed 100°C.

Another aspect of the invention is the requirement of the presence of a source of silicon atoms during the fluoride ion treatment of the zeolite. The X-ray diffraction patterns of the products resulting from the fluoride treatment compared to X-ray patterns of the reactant zeolite appear to indicate that silicon as

SiO$_4$ tetrahedra is substituted into the framework of the zeolite. That is, the X-ray diffraction patterns of the product zeolites show increases in intensity greater than 5%, and there are expected slight shifts in the peak positions due to changes in unit cell constants. Shifts in peak positions are usually associated with changes in unit cell parameters which support the concept that silicon is replacing aluminum in the zeolite framework.

In accordance with the invention, the source of silicon atoms can be a silicate or silica. Preferably, the source of silicon is silica and most preferably the silica is present as a binder for the zeolite. When the zeolite is used in a catalyst composition with a matrix or binder, the amount of zeolite in that composite composition can range from 0.1 to 99 and more usually from 2 to 70 percent by weight of the composite. In addition to the silica binder, the zeolite may be composited with a porous matrix material which forms part of a binary or ternary binder system in which one of the other components is silica. In addition to modifying acidity of the zeolite, it is believed that the fluoride treatment will allow alteration of shape selective properties of the zeolite.

After fluoride treatment, the zeolite can be ammonium ion-exchanged in conventional manner and then calcined at a temperature up to aout 600°C to convert the zeolite to its hydrogen form.

The modified zeolite of the present invention is useful as a catalyst component for a variety of organic, e.g. hydrocarbon, compound conversion processes, such as oligomerization of olefins to produce high V.I. lubricating oils.

## EXAMPLE

In a plastic container, 2 g of silica bound ZSM-5 in ammonium form was reacted with 50 mL of a 0.2 M solution of ammonium hydrogen fluoride (NH$_4$F.HF). The pH of the reactant solution was approximately 3.5. The container was covered, heated to 80°C, and allowed to react overnight. The product zeolite was filtered and washed with distilled water. The zeolite was then exchanged with ammonium nitrate, washed, and calcined. Ammonium exchange capacity data from TGA analyses as well as hexane cracking activity, (alpha value), of the parent and treated zeolites are given below in Table 1 below.

### Table 1

|  | $NH_4^+$ exchange capacity | $SiO_2/Al_2O_3$ | alpha value |
|---|---|---|---|
| Parent | 0.27 meq/g | 79 | 223 |
| Treated | 0.23 meq/g | 93 | 140 |

The data clearly show that aluminum has been removed from the framework of the parent zeolite.

Crystallinity data shows that the treated zeolite is more stable since the intensities of the 5 major peaks in the ZSM-5 pattern between 21-25°, two-theta are an average of 7% stronger in the treated zeolite product over the parent. Peak intensities as well as peak positions are different for the product zeolite. Shifts in peak positions are usually associated with a change in unit cell parameters and support the concept that silicon has replaced aluminum in the zeolite framework.

## CLAIMS:

1.  A process for removing aluminum from an aluminosilicate zeolite having a silica:alumina ratio of at least about 3:1 comprising the step of contacting the zeolite with a source of fluoride ions and a source of silicon atoms under hydrolytic conditions including a pH of less than about 7.

2.  The process of Claim 1, wherein the X-ray diffraction pattern of the final zeolite exhibits shifts in peak positions as compared to the pattern of the zeolite prior to said contacting.

3.  The process of Claim 1 or Claim 2, wherein said source of silicon is a silica binder.

4.  The process of any preceiding Claim wherein said source of fluoride includes ammonium fluoride.

5.  The process of any preceding Claim, wherein said pH is equal to or greater than 2.

6.  The process of any preceding Claim wherein said zeolite has a Constraint Index of 1 to 12.